# EUROPÄISCHE PATENTSCHRIFT

(11) **EP 4 440 972 B1**
(45) Veröffentlichungstag und Bekanntmachung des Hinweises auf die Patenterteilung: **04.02.2026**
(21) Anmeldenummer: 22813241.1
(22) Anmeldetag: 03.11.2022
(51) Int. Cl.: B66B 1/34

(54) **AUFZUGANLAGE UND VERFAHREN ZUR BESTIMMUNG DER POSITION EINER IN EINEM AUFZUGSCHACHT VERFAHRBAR ANGEORDNETEN AUFZUGKABINE DER AUFZUGANLAGE**
ELEVATOR AND METHOD FOR DETERMINING THE POSITION OF AN ELEVATOR CAR OF THE ELEVATOR WHICH CAN BE MOVED IN AN ELEVATOR SHAFT
ASCENSEUR ET PROCÉDÉ DE DÉTERMINATION DE LA POSITION D'UNE CABINE D'ASCENSEUR MOBILE DANS UNE CAGE D'ASCENSEUR

(30) Priorität: 30.11.2021 EP 21211346
(43) Veröffentlichungstag der Anmeldung: 09.10.2024
(73) Patentinhaber: INVENTIO AG, 6052 Hergiswil (CH)
(72) Erfinder: DE COI, Beat, 7304 Maienfeld (CH); STUDER, Christian, 6010 Kriens (CH); HOSEMANN, Axel, 5644 Auw (CH); GRAF, Udo, 9475 Sevelen (CH)
(74) Vertreter: Inventio AG
(86) Internationale Anmeldenummer: PCT/EP2022/080704
(87) Internationale Veröffentlichungsnummer: WO 2023/099106

(56) Entgegenhaltungen:
- EP-B1- 3 452 396
- JP-A- 2007 145 475

## Beschreibung

Die Erfindung betrifft eine Aufzuganlage mit den Merkmalen des Anspruchs 1 und ein Verfahren zur Bestimmung der Position einer in einem Aufzugschacht verfahrbar angeordneten Aufzugkabine einer Aufzuganlage mit den Merkmalen des Anspruchs 10.

Aufzugsanlagen dienen zur Beförderung von Personen und/oder Gütern zwischen Stockwerken von Gebäuden. Dazu werden mindestens eine Personen und/oder Güter aufnehmende Aufzugkabine in einem Aufzugschacht insbesondere vertikal zwischen den Stockwerken verfahren. Insbesondere um die Aufzugkabine genau an einem Stockwerk anhalten zu können, muss die Position der Aufzugkabine im Aufzugschacht bestimmt und von einer Aufzugsteuerung verarbeitet werden. Es ist auch möglich, dass ein erlaubter Verfahrbereich der Aufzugkabine im Aufzugschacht ausschliesslich durch Überwachung der Position der Aufzugkabine sichergestellt und auf im Aufzugschacht installierte, so genannte Endschalter verzichtet wird. In diesem Fall ist eine sichere bzw. zuverlässige Bestimmung der Position der Aufzugkabine im Aufzugschacht wichtig. Ein derartiges Vorgehen ist beispielsweise in der EP 3434634 B1 beschrieben.

Es ist eine Vielzahl von Systemen zur Bestimmung der Position einer Aufzugkabine in einem Aufzugschacht bekannt, welche auf unterschiedlichsten Messprinzipien beruhen. Beispielsweise beschreibt die EP1390284B1 ein System zur Bestimmung der Position einer in einem Aufzugschacht verfahrbar angeordneten Aufzugkabine einer Aufzuganlage, bei dem ein sich über den gesamten Aufzugschacht erstreckendes Codeband abgetastet und aus den ausgelesenen Informationen die Position der Aufzugkabine bestimmt wird.

Die EP 3452396 B1 beschreibt ein System zur Bestimmung der Position einer in einem Aufzugschacht verfahrbar angeordneten Aufzugkabine einer Aufzuganlage mit einem 3D-Sensor in Form einer 3D-Kamera, einer Auswerteeinheit in Form eines Computersystems und einem Markierungselement in Form einer Kante zwischen einer Schachtwand und einem Schachtboden. Die 3D-Kamera ist an der Aufzugkabine angeordnet und weist mehrere Sensorzellen auf. Sie ist so angeordnet, dass sie die genannte Kante und einen Bereich um die Kante als Objekt erfasst. Das Computersystem ist dazu konfiguriert, mit von der 3D-Kamera empfangenen Messdaten eine Entfernung jeder Sensorzelle zu einem von dieser Sensorzelle erfassten Teil eines von der 3D-Kamera erfassten Objekts zu ermitteln und basierend auf Entfernungen von Sensorzellen zu einem von diesen Sensorzellen erfassten Teil des von der 3D-Kamera erfassten Objekts die Position der Aufzugkabine im Aufzugschacht zu bestimmen.

Es ist insbesondere die Aufgabe der Erfindung, eine Aufzuganlage und ein Verfahren zur Bestimmung der Position einer in einem Aufzugschacht verfahrbar angeordneten Aufzugkabine einer Aufzuganlage vorzuschlagen, welche eine besonders sichere Bestimmung der Position der Aufzugkabine und damit einen besonders sicheren Betrieb einer das System aufweisenden bzw. das Verfahren anwendenden Aufzuganlage ermöglicht. Erfindungsgemäss wird diese Aufgabe mit einem System mit den Merkmalen des Anspruchs 1 und einem Verfahren mit den Merkmalen des Anspruchs 10 gelöst.

Die im Folgenden beschriebenen Ausführungsformen und Ausführungsbeispiele der Erfindung betreffen gleichermassen das System und das Verfahren. In anderen Worten lassen sich im Folgenden beispielsweise unter Bezugnahme auf das System genannte Merkmale auch als Verfahrensschritte implementieren, und umgekehrt. Das System ist damit insbesondere so ausgeführt und konfiguriert, dass es die beschriebenen Verfahren ausführen kann bzw. von ihm die beschriebenen Verfahren ausgeführt werden können.

Die erfindungsgemässe Aufzuganlage mit einem System zur Bestimmung der Position einer in einem Aufzugschacht verfahrbar angeordneten Aufzugkabine einer Aufzuganlage verfügt über einen 3D-Sensor, eine mit dem 3D-Sensor in Kommunikationsverbindung stehende Auswerteeinheit und ein Markierungselement. Von den beiden Bauteilen 3D-Sensor und Markierungselement ist ein Bauteil unbeweglich im Aufzugschacht und das andere Bauteil an der Aufzugkabine angeordnet. Der 3D-Sensor weist mehrere Sensorzellen auf und die Auswerteeinheit ist dazu konfiguriert, mit vom 3D-Sensor empfangenen Messdaten eine Entfernung jeder Sensorzelle zu einem von dieser Sensorzelle erfassten Teil eines vom 3D-Sensor erfassten Objekts zu ermitteln. Der 3D-Sensor ist so angeordnet, dass er in einem Normalmodus des Systems das Markierungselement als Objekt erfasst. Die Auswerteeinheit ist dazu konfiguriert, basierend auf Entfernungen von Sensorzellen zu einem von diesen Sensorzellen erfassten Teil des vom 3D-Sensor erfassten Objekts die Position der Aufzugkabine im Aufzugschacht zu bestimmen, laufend eine Prüfung durchzuführen, ob der 3D-Sensor das Markierungselement erfasst, und das System in einen Fehlermodus zu bringen, sobald die genannte Prüfung negativ ausfällt.

Damit ist sichergestellt, dass sich das System nur dann im Normalmodus befindet, wenn der 3D-Sensor das Markierungselement erfasst und damit die Position der Aufzugkabine im Aufzugschacht sicher bestimmt werden kann. Umgekehrt ist sichergestellt, dass das System sofort in den Fehlermodus gebracht wird, wenn der 3D-Sensor das Markierungselement nicht erfasst und damit die Position der Aufzugkabine im Aufzugschacht nicht sicher bestimmt werden kann. Der 3D-Sensor kann das Markierungselement beispielsweise dann nicht erfassen, wenn die Ausrichtung des 3D-Sensors beispielsweise auf Grund sich einer lockeren Befestigung verändert hat. Sobald sich das System im Fehlermodus befindet, wird insbesondere der Betrieb der Aufzuganlage eingeschränkt oder ganz eingestellt. Dies kann durch das genannte System selbst veranlasst werden oder von einer Steuerungseinrichtung bzw. Sicherheitseinrichtung der Aufzuganlage, welche mit der Auswerteeinheit des Systems in Kommunikationsverbindung steht. Die Auswerteeinheit kann dazu beispielsweise neben der Position der Aufzugkabine eine Information über ihren aktuellen Modus, also wenigstens Normalmodus oder Fehlermodus, ausgeben. Das System ist damit Teil eines Sicherheitssystems der Aufzuganlage. Die erfindungsgemässe Ausführung des Systems ermöglicht es, dass die Anforderungen des Sicherheits-Integritätslevels (engl. ,safety integrity level', kurz SIL) SIL-3 erfüllt werden können.

Das System benötigt neben dem 3D-Senor, der Auswerteeinheit und dem Markierungselement keine weiteren Bauteile, die im Aufzugschacht oder an der Aufzugkabine montiert werden müssen. Insbesondere muss kein sich über den gesamten Aufzugschacht erstreckendes Codeband montiert werden. Das erfindungsgemässe System erfordert damit nur einen geringen Installationsaufwand.

Die genannte Aufgabe wird auch mit einem Verfahren zur Bestimmung der Position einer in einem Aufzugschacht verfahrbar angeordneten Aufzugkabine einer Aufzuganlage mit einem oben beschriebenen System zur Bestimmung der Position einer in einem Aufzugschacht verfahrbar angeordneten Aufzugkabine einer Aufzuganlage gelöst. Die Auswerteeinheit bestimmt basierend auf Entfernungen von Sensorzellen zu einem von diesen Sensorzellen erfassten Teil des vom 3D-Sensor erfassten Objekts die Position der Aufzugkabine im Aufzugschacht, führt laufend eine Prüfung durch, ob der 3D-Sensor das Markierungselement erfasst, und bringt das System in einen Fehlermodus, sobald die genannte Prüfung negativ ausfällt.

Der 3D-Sensor und die Auswerteeinheit sind insbesondere in räumlicher Nähe zueinander angeordnet, beispielsweise in einem gemeinsamen Gehäuse. Es ist aber auch möglich, dass der 3D-Sensor und die Auswerteeinheit räumlich getrennt voneinander angeordnet sind. Es ist ausserdem möglich, dass die Auswerteeinheit aus mehreren untereinander in Kommunikationsverbindung stehenden Teilen oder Modulen besteht, welche zumindest teilweise beim 3D-Sensor oder von ihm beabstandet angeordnet sein können. Zumindest ein Modul der Auswerteeinheit kann auch als eine Steuerungseinrichtung ausgeführt sein, welche andere Steuerungsaufgaben innerhalb der Aufzuganlage ausführt.

Für die Anordnung des 3D-Sensors einerseits und dem Markierungselement andererseits gibt es insbesondere folgende Möglichkeiten:
- der 3D-Sensor ist unbeweglich an einem Ende des Aufzugschachts und das Markierungselement ist an einer dem 3D-Sensor zugewandten Seite der Aufzugkabine angeordnet oder
- das Markierungselement ist unbeweglich an einem Ende des Aufzugschachts und der 3D-Sensor ist an einer dem Markierungselement zugewandten Seite der Aufzugkabine angeordnet.

Es wird also entweder das Markierungselement oder der 3D-Sensor mit der Aufzugkabine im Aufzugschacht verfahren und das jeweils andere Teil ist unbeweglich, insbesondere an einem Ende des Aufzugschachts angeordnet. Da der Aufzugschacht insbesondere hauptsächlich vertikal ausgerichtet ist, ist entweder das Markierungselement oder der 3D-Sensor am unteren Ende oder am oberen Ende des Aufzugschachts unbeweglich angeordnet. Es ist dabei bekannt, an welcher Position bzw. Höhe das Markierungselement oder der 3D-Sensor im Aufzugschacht angeordnet ist. Es ist ausserdem bekannt, an welcher Stelle das entsprechend andere Teil an der Aufzugkabine angeordnet ist. Damit ist ausgehend von der genannten festen Position des Markierungselements oder der 3D-Sensors im Aufzugschacht und der mittels des 3D-Sensors bestimmten Entfernung zum Markierungselement oder zu einem an das Markierungselement angrenzenden Bereich, die Position der Aufzugkabine im Aufzugschacht bestimmbar. Bei einem senkrecht ausgerichteten Aufzugschacht wird mit der Position der Aufzugkabine im Aufzugschacht die Höhe bestimmt, an der sich die Aufzugkabine befindet. Die Position der Aufzugkabine kann dabei zu jedem Zeitpunkt bestimmt werden. Es ist dabei nicht notwendig, dass eine vorhergehende Position der Aufzugkabine bekannt ist.

Der 3D-Sensor und die Auswerteeinheit sind insbesondere Teil einer so genannten 3D-Kamera. 3D-Kameras sind auf dem Markt zu vergleichsweise günstigen Preisen verfügbar.

Der 3D-Sensor ist insbesondere als ein Photomischdetektor, auch PMD-Sensor (engl. Photonic Mixing Device) genannt, ausgeführt, dessen Funktionsprinzip auf dem Lichtlaufzeitverfahren (engl.: Time of Flight) beruht. Die den 3D-Sensor umfassende 3D-Kamera ist in diesem Fall als eine so genannte Time-of-Flight-Kamera oder abgekürzt als eine TOF-Kamera ausgeführt. Die TOF-Kamera und damit das System zur Bestimmung der Position einer Aufzugkabine in einem Aufzugschacht weisen damit einen Sender zum Aussenden von elektromagnetischer Strahlung auf. Der 3D-Sensor ist dann dazu konfiguriert, für jede Sensorzelle eine Laufzeit der vom Sender ausgesandten und vom erfassten Objekt reflektierten elektromagnetischen Strahlung zu bestimmen und über die genannte Kommunikationsverbindung an die Auswerteeinheit zu übermitteln. Die Auswerteeinheit ist dann dazu konfiguriert, die Entfernung jeder Sensorzelle zu einem von dieser Sensorzelle erfassten Teil des vom 3D-Sensor erfassten Objekts auf Grund der genannten Laufzeiten zu bestimmen. Es ist auch möglich, dass der 3D-Sensor Messdaten an die Auswerteeinheit übermittelt und die Auswerteeinheit daraus die genannten Laufzeiten und damit die genannten Entfernungen bestimmt. Die genannten Laufzeiten werden insbesondere durch eine Bestimmung einer Phasenverschiebung der vom Sender ausgesandten und der vom erfassten Objekt reflektierten elektromagnetischen Strahlung ermittelt. Der 3D-Sensor kann beispielsweise mehrere in der EP2743724B1 beschriebenen TOF Entfernungssensoren aufweisen, wobei jeder der TOF Entfernungssensoren einer Sensorzelle entspricht.

Der 3D-Sensor kann die Entfernungen der einzelnen Sensorzellen zu einem erfassten Objekt auch basierend auf einem anderen Messprinzip erfassen. Der 3D-Sensor kann beispielsweise Teil einer Stereokamera oder eines Triangulationssystems sein.

Das Markierungselement kann beliebig ausgeführt sein, es muss lediglich von der Auswerteeinheit aus den vom 3D-Sensor gelieferten Messdaten eindeutig identifizierbar sein. Wenn der 3D-Sensor TOF-Sensoren aufweist, kann das Markierungselement beispielsweise als ein Reflektor zum Reflektieren der vom Sender ausgesandten elektromagnetischen Strahlung in Richtung 3D-Sensor ausgeführt sein. Die Auswerteeinheit kann in diesem Fall das Markierungselement in Form eines Reflektors dadurch identifizieren, dass der Reflektor viel mehr elektromagnetische Strahlung reflektiert als seine Umgebung. Der Reflektor verfügt beispielsweise über zahlreiche kleine Tripelspiegel und kann als eine Folie ausgeführt sein. Derartige Reflektoren werden beispielsweise auch als so genannte Laserreflektoren zum Reflektieren von Laserstrahlen eingesetzt.

Der 3D-Sensor weist mehrere Sensorzellen, insbesondere in Form einzelner TOF-Sensoren auf, welche insbesondere in einer Matrixanordnung angeordnet sind. Eine Sensorzelle kann dabei auch als ein Pixel des 3D-Sensors bezeichnet werden. Der 3D-Sensor kann beispielsweise 160x60 oder 320x240 Sensorzellen aufweisen.

Der 3D-Sensor wird in einer Installationsphase so angeordnet, dass er das Markierungselement und einen Bereich um das Markierungselement als Objekt erfasst. Ist dies gegeben, dann kann die Position der Aufzugkabine im Aufzugschacht bestimmt werden und das System befindet sich in einem Normalmodus. Es ist dabei insbesondere darauf zu achten, dass das Markierungselement bei jeder möglichen Position der Aufzugkabine, also über den gesamten Verfahrbereich der Aufzugkabine, vom 3D-Sensor erfasst wird.

Die Auswerteeinheit ist dazu konfiguriert, basierend auf Entfernungen von Sensorzellen zu einem von diesen Sensorzellen erfassten Teil des vom 3D-Sensor erfassten Objekts die Position der Aufzugkabine im Aufzugschacht zu bestimmen. Sie ist auch dazu konfiguriert, laufend eine Prüfung durchzuführen, ob der 3D-Sensor das Markierungselement erfasst. Dazu kann sie insbesondere Sensorzellen bestimmen, welche das Markierungselement erfassen. Wenn sie eine oder mehrere derartige Sensorzellen bestimmen kann, dann erfasst der 3D-Sensor das Markierungselement und die Prüfung fällt positiv aus. Wenn sie keine derartige Sensorzelle bestimmen kann, dann erfasst der 3D-Sensor das Markierungselement nicht und die Prüfung fällt negativ aus.

Unter einer laufenden Prüfung soll hier verstanden werden, dass die Prüfung immer wieder, insbesondere in einem vorgegeben Takt durchgeführt wird. Die Prüfung kann beispielsweise mit einer Frequenz von 1 bis 100 Hz durchgeführt werden.

Wenn die genannte Prüfung negativ ausfällt, der 3D-Sensor das Markierungselement nicht erfasst, dann bringt die Auswerteeinheit das System zur Bestimmung der Position der Aufzugkabine in einen Fehlermodus. Die Auswerteeinheit gibt dann ein entsprechendes Signal aus oder bringt selbstständig die Aufzuganlage in einen sicheren Zustand.

Die Bestimmung der das Markierungselement erfassenden Sensorzellen kann auf unterschiedlichste Art erfolgen. Die Auswerteeinheit kann beispielsweise ein charakteristisches Entfernungsmuster des Markierungselements erkennen. Es ist auch möglich, dass das Markierungselement aktiv eine elektromagnetische Strahlung aussendet, die von den Sensorzellen erfasst werden kann. Durch die Auswertung der Intensität der erfassten Strahlung kann die Auswerteeinheit die das Markierungselement erfassenden Sensorzellen bestimmen.

Zur Bestimmung der Position der Aufzugkabine ist die Auswerteeinheit beispielsweise dazu konfiguriert, die Position der Aufzugkabine im Aufzugschacht basierend auf den ermittelten Entfernungen zum erfassten Objekt dieser Sensorzellen und/oder Sensorzellen, welche in einem an die genannten Sensorzellen angrenzenden Bereich angeordnet sind, zu bestimmen. Es ist dabei möglich, dass nur eine Sensorzelle das Markierungselement erfasst. In diesem Fall kann die Auswerteeinheit die Position der Aufzugkabine beispielsweise basierend auf der ermittelten Entfernung dieser Sensorzelle zum erfassten Objekt bestimmen. Es ist auch möglich, dass die Auswerteeinheit die Messdaten einer oder mehrerer zur genannten Sensorzelle benachbarten Sensorzellen auswertet. Dabei kann die Position der Aufzugkabine beispielsweise basierend auf einem Mittelwert der ermittelten Entfernungen dieser Sensorzellen zum erfassten Objekt bestimmt werden. Es ist auch möglich, dass mehrere Sensorzellen das Markierungselement erfassen. In diesem Fall kann die Auswerteeinheit die Position der Aufzugkabine beispielsweise basierend auf einem Mittelwert der ermittelten Entfernungen dieser Sensorzellen zum erfassten Objekt bestimmen. Es können auch zu den genannten Sensorzellen benachbarte Sensorzellen ausgewertet werden. Beispielsweise können in alle Richtungen eine oder zwei Reihen von Sensorzellen, welche an die das Markierungselement erfassenden Sensorzellen angrenzen, ausgewertet werden. Es ist ebenfalls möglich, dass nicht die direkt an die das Markierungselement erfassenden Sensorzellen ausgewertet werden, sondern Sensorzellen, die einen kleinen Abstand zu den das Markierungselement erfassenden Sensorzellen aufweisen. Auch diese Sensorzellen sind in einem an die das Markierungselement erfassenden Sensorzellen angrenzenden Bereich angeordnet. Der genannte Bereich muss nicht zwingend direkt an die das Markierungselement erfassenden Sensorzellen angrenzen.

In Ausgestaltung der Erfindung ist die Auswerteeinheit dazu konfiguriert, die genannte Prüfung so durchzuführen, dass sie dann negativ ausfällt, wenn der 3D-Sensor das Markierungselement für eine ununterbrochene Zeitspanne mit einer vorgegebenen Zeitdauer nicht erfasst. Damit kann vorteilhaft vermieden werden, dass das System unnötig in den Fehlermodus gebracht wird. Die genannte Zeitspanne kann beispielsweise 10 - 1000 ms betragen.

In Ausgestaltung der Erfindung ist das Markierungselement so angeordnet und weist eine räumliche Ausdehnung auf, dass sich ein charakteristisches Entfernungsmuster gegenüber dem 3D-Sensor ergibt. Die Auswerteeinheit ist dann dazu konfiguriert, die das Markierungselement erfassenden Sensorzellen auf Grund des genannten Entfernungsmusters des Markierungselements zu bestimmen. Das Markierungselement kann damit besonders einfach und kostengünstig ausgeführt sein.

Das Markierungselement kann beispielsweise als ein geometrischer Körper in Form eines Zylinders mit einer bekannten Höhe ausgeführt sein, wobei die Rotationsachse des Zylinders insbesondere in Richtung 3D-Sensor ausgerichtet ist. Das genannte charakteristische Entfernungsmuster ist in dem Fall so ausgeführt, dass eine kreisrunde Fläche einen um die bekannte Höhe des Zylinders geringere Entfernung als seine unmittelbare Umgebung aufweist. Ein derartiges Entfernungsmuster kann von der Auswerteeinheit einfach mittels bekannter Mustererkennungsverfahren erkannt werden. In diesem Fall wären alle innerhalb der genannten kreisrunden Fläche liegenden Sensorzellen solche, die das Markierungselement erfassen.

In Ausgestaltung der Erfindung ist das Markierungselement so ausgeführt, dass es aktiv elektromagnetische Strahlung aussendet. Die Sensorzellen des 3D-Sensors sind dann so ausgeführt, dass sie die vom Markierungselement ausgesandte elektromagnetische Strahlung erfassen können. Ausserdem ist der 3D-Sensor so ausgeführt, dass er pro Sensorzelle eine die Menge der genannten elektromagnetischen Strahlung kennzeichnende Intensitäts-Kenngrösse an die Auswerteeinheit übermittelt. Die Auswerteeinheit ist dabei dazu konfiguriert, die das Markierungselement erfassenden Sensorzellen auf Grund der genannten Intensitäts-Kenngrössen zu bestimmen. Damit können die das Markierungselement erfassenden Sensorzellen besonders zuverlässig bestimmt werden.

Die Sensorzellen sind in diesem Fall insbesondere als PMD-Sensoren ausgeführt, welche zusätzlich zur Entfernung des erfassten Objekts aus der Intensität der erfassten elektromagnetischen Strahlung einen so genannten Grauwert berechnen können. Dieser Grauwert ist dann eine die Menge der genannten elektromagnetischen Strahlung kennzeichnende Intensitäts-Kenngrösse, welche an die Auswerteeinheit übermittelt wird. Durch das Aussenden der gennannten elektromagnetischen Strahlung durch das Markierungselement ermitteln die das Markierungselement erfassenden Sensorzellen eine besonders hohe Intensität der erfassten elektromagnetischen Strahlung und können so besonders einfach von der Auswerteeinheit ermittelt werden.

Die vom Markierungselement ausgesandte elektromagnetische Strahlung weist dabei insbesondere dieselbe oder zumindest eine ähnliche Wellenlänge auf wie die vom Sender der die Sensorzellen umfassenden TOF-Kamera ausgesandte elektromagnetische Strahlung. Die vom Markierungselement ausgesandte elektromagnetische Strahlung ist auf jeden Fall so gewählt, dass die vom 3D-Sensor erfasst werden kann.

In Ausgestaltung der Erfindung weist das Markierungselement eine LED, insbesondere eine Infrarot-LED auf. Das Markierungselement kann auch mehr als eine LED aufweisen.

Da LEDs sehr kostengünstig auf dem Markt erhältlich sind, ist damit das Markierungselement besonders kostengünstig ausführbar. Sender von TOF-Kameras senden insbesondere Infrarotlicht als elektromagnetische Strahlung aus. Aus diesem Grund ist eine Infrarot-LED, also eine Infrarotlicht aussendende LED besonders vorteilhaft einsetzbar. Es sind aber auch LEDs einsetzbar, welche sichtbares Licht aussenden.

In Ausgestaltung der Erfindung ist die Auswerteeinheit dazu konfiguriert, diejenigen Sensorzellen zu bestimmen, welche das Markierungselement erfassen, und die Position der Aufzugkabine im Aufzugschacht basierend auf den ermittelten Entfernungen zum erfassten Objekt dieser Sensorzellen und/oder Sensorzellen, welche in einem an die genannten Sensorzellen angrenzenden Bereich angeordnet sind, zu bestimmen. Damit wird eine besonders zuverlässige Bestimmung der Position der Aufzugkabine gewährleistet.

Insbesondere ist um das Markierungselement herum oder an das Markierungselement angrenzend ein Reflektor zum Reflektieren der vom Sender ausgesandten elektromagnetischen Strahlung in Richtung 3D-Sensor angeordnet. Damit ist eine besonders genaue und zuverlässige Bestimmung der Position einer Aufzugkabine in einem Aufzugschacht möglich.

Ein Reflektor reflektiert besonders viel der vom Sender der TOF-Kamera ausgesandten elektromagnetische Strahlung. Damit kann die Entfernung zwischen den Sensorzellen des 3D-Sensors und dem Reflektor sehr genau und zuverlässig bestimmt werden. Der Reflektor kann beispielsweise einen quadratischen Querschnitt aufweisen und das Markierungselement kann im Mittelpunkt des Querschnitts angeordnet sein. Der Reflektor kann beispielsweise auch einen kreisrunden oder rechteckigen Querschnitt aufweisen und das Markierungselement kann mittig in dem genannten Querschnitt angeordnet sein. Es ist auch möglich, dass das Markierungselement an einer bekannten Seite an den Reflektor angrenzt und die Auswerteeinheit so konfiguriert ist, die Position der Aufzugkabine basierend auf den ermittelten Entfernungen zum erfassten Objekt von Sensorzellen zu bestimmen, welche den Reflektor erfassen.

Es wird darauf hingewiesen, dass einige der möglichen Merkmale und Vorteile der Erfindung hierin mit Bezug auf unterschiedliche Ausführungsformen des erfindungsgemässen Systems einerseits und des erfindungsgemässen Verfahrens andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine schematische Darstellung einer Aufzuganlage mit einem System zur Bestimmung der Position einer in einem Aufzugschacht verfahrbar angeordneten Aufzugkabine,
- Fig. 2: eine schematische Darstellung eines 3D-Sensors mit 36 Sensorzellen und
- Fig. 3: ein Markierungselement gemäss einem alternativen Ausführungsbeispiel.

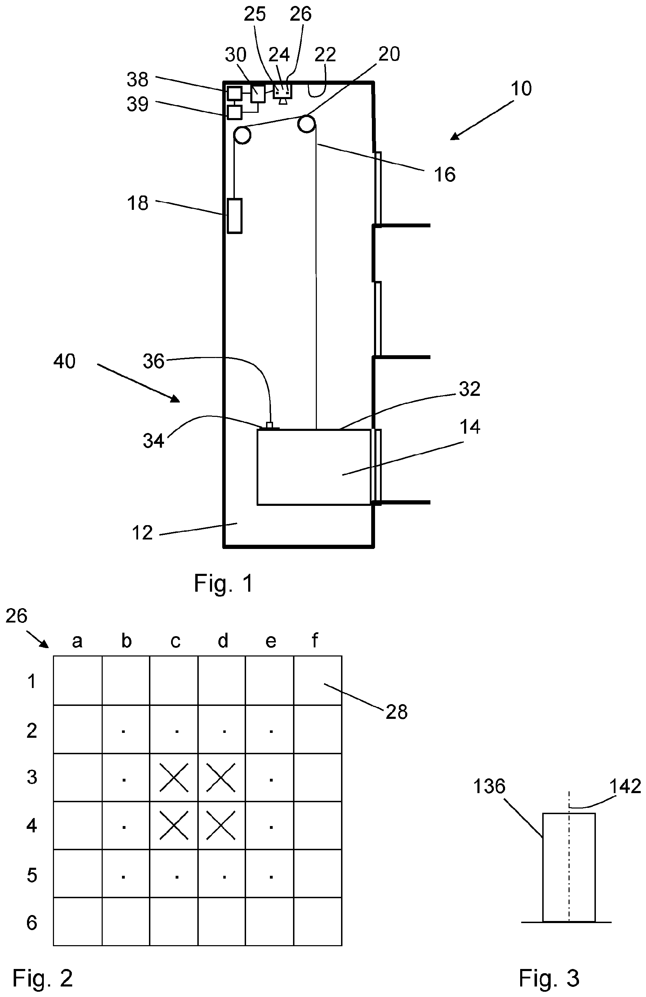

Gemäss Fig. 1 verfügt eine Aufzuganlage 10 über einen in vertikaler Richtung ausgerichteten Aufzugschacht 12. Innerhalb des Aufzugschachts 12 ist eine Aufzugkabine 14 angeordnet, welche über ein Tragmittel 16 in Form eines flexiblen Bands oder eines Seils mit einem Gegengewicht 18 auf bekannte Weise verbunden ist. Das Tragmittel 16 verläuft ausgehend von der Aufzugkabine 14 über eine Antriebsscheibe 20, welche von einer nicht dargestellten Antriebsmaschine angetrieben werden kann. Mittels der Antriebsmaschine und dem Tragmittel 16 kann die Aufzugkabine 14 im Aufzugschacht 12 auf und ab verfahren werden.

An einer Schachtdecke 22 des Aufzugschachts 12 ist eine 3D-Kamera in Form einer TOF-Kamera 24 unbeweglich angeordnet. Die TOF-Kamera 24 verfügt über einen Sender 25 zum Aussenden von elektromagnetischer Strahlung und über einen 3D-Sensor in Form eines PMD-Sensors 26. Der PMD-Sensor 26 ist in Fig. 2 sehr schematisch dargestellt; er verfügt über insgesamt 36 Sensorzellen 28, welche in 6 Spalten a - f und 6 Zeilen 1 - 6 angeordnet sind. Der PMD-Sensor 26 ist dazu konfiguriert, für jede Sensorzelle 28 eine Laufzeit der vom Sender 25 ausgesandten und von einem vom PMD-Sensor 26 erfassten Objekt reflektierten elektromagnetischen Strahlung zu bestimmen und über eine Kommunikationsverbindung an eine Auswerteeinheit 30 zu übermitteln. Die Auswerteeinheit 30 ist dazu konfiguriert, die Entfernung jeder Sensorzelle 28 zu einem von dieser Sensorzelle erfassten Teil des vom PMD-Sensor 26 erfassten Objekts auf Grund der genannten Laufzeiten zu bestimmen.

Es ist auch möglich, dass der PMD-Sensor Messdaten an die Auswerteeinheit übermittelt und die Auswerteeinheit daraus die genannten Laufzeiten und damit die genannten Entfernungen bestimmt. Die Auswerteeinheit kann auch Teil der TOF-Kamera sein.

Auf einer Kabinendecke 32 der Aufzugkabine 14 ist ein Reflektor 34 mit einem quadratischen Durchmesser angeordnet. Der Reflektor 34 ist so angeordnet, dass er vom Sender 25 der TOF-Kamera 24 ausgesandte elektromagnetische Strahlung zur TOF-Kamera 24 und damit zum PMD-Sensor 26 reflektiert. Mittig im Reflektor 34 ist ein Markierungselement in Form einer Infrarot-LED 36 angeordnet. Die Infrarot-LED 36 sendet aktiv elektromagnetische Strahlung mit einer ähnlichen Wellenlänge wie der Sender 25 der TOF-Kamera 24 aus.

Die TOF-Kamera 24 und damit auch der PMD-Sensor 26 werden in einer Installationsphase so angeordnet und ausgerichtet, dass der PMD-Sensor 26 die Infrarot-LED 36 und zumindest einen Bereich um die Infrarot-LED 36 als Objekt erfasst. Dabei wird insbesondere darauf geachtet, dass die Infrarot-LED 36 bei jeder möglichen Position der Aufzugkabine 14 im Aufzugschacht 12, also über den gesamten Verfahrbereich der Aufzugkabine 14, vom PMD-Sensor 26 erfasst wird.

Zur Bestimmung der Position der Aufzugkabine 14 im Aufzugschacht 12, also zur Bestimmung, in welcher Höhe sich die Aufzugkabine 14 im Aufzugschacht 12 befindet, erfasst die TOF-Kamera 24 und damit der PMD-Sensor 26 zumindest den Teil des Kabinendachs 32 als Objekt, an welchem der Reflektor 34 und die Infrarot-LED 36 angeordnet sind. Die Auswerteeinheit 30 ermittelt auf Basis der Laufzeit der vom Sender 25 ausgesandten und vom erfassten Objekt reflektierten elektromagnetischen Strahlung für jede Sensorzelle 28 die Entfernung zu dem von dieser Sensorzelle 28 erfassten Teil des vom PMD-Sensor 26 erfassten Objekts.

Die Sensorzellen 28 des PMD-Sensors 26 können ausserdem aus der Intensität der erfassten elektromagnetischen Strahlung einen so genannten Grauwert bestimmen. Die genannte Intensität ist bei den die Infrarot-LED 34 erfassenden Sensorzellen besonders hoch, so dass diese Sensorzellen einen besonders hohen Grauwert ausgeben. Der Grauwert kann damit als eine die Menge einer von einer Sensorzelle erfassten elektromagnetischen Strahlung kennzeichnende Intensitäts-Kenngrösse bezeichnet werden.

Der PMD-Sensor 26 übermittelt für jede Sensorzelle 28 den genannten Grauwert und die ermittelte Entfernung zum erfassten Objekt an die Auswerteeinheit 30. Die Auswerteeinheit 30 ist dazu konfiguriert, in einem ersten Schritt die die Infrarot-LED 36 erfassenden Sensorzellen 28 zu bestimmen. Die Auswerteeinheit 30 wählt dazu die Sensorzellen 28 mit einem besonders hohen Grauwert aus. Im in Fig. 2 dargestellten Beispiel sind das die mit einem Kreuz gekennzeichneten Sensorzellen c3, c4, d3 und d4 (der Buchstabe gibt die Spalte und die Zahl die Reihe der entsprechenden Sensorzelle in der Matrixanordnung der Sensorzellen 28 an). Zur Bestimmung der Position der Aufzugkabine 14 im Aufzugschacht 12 ermittelt die Auswerteeinheit 30 den Mittelwert der Entfernungen der an die die Infrarot-LED 36 erfassenden Sensorzellen c3, c4, d3 und d4 angrenzenden, mit einem Punkt gekennzeichneten Sensorzellen b2, c2, d2, e2, b3, b4, b5, c5, d5, e5, e4, e3. Die zur Bestimmung der Position der Aufzugkabine 14 verwendeten Sensorzellen b2, c2, d2, e2, b3, b4, b5, c5, d5, e5, e4, e3 erfassen alle den um die Infrarot-LED 36 herum angeordneten Reflektor 34, was eine besonders genaue Bestimmung der Position ermöglicht.

Die Position der Aufzugkabine 14 wird dann aus dem genannten Mittelwert der Entfernungen, der bekannten Position des PMD-Sensors 26 im Aufzugschacht 12 und der bekannten Position der Infrarot-LED 36 bzw. des Reflektors 34 an der Aufzugkabine 14 bestimmt. Die Auswerteeinheit 30 übermittelt die Position der Aufzugkabine 14 an eine Aufzugsteuerung 38, welche sie beispielsweise für die Ansteuerung der Antriebsmaschine verwendet.

Ein System 40 zur Bestimmung der Position der im Aufzugschacht 12 verfahrbar angeordneten Aufzugkabine 14 der Aufzuganlage 10 verfügt damit über einen 3D-Sensor in Form des PMD-Sensors 26, die mit dem PMD-Sensor 26 in Kommunikationsverbindung stehende Auswerteeinheit 30 und ein Markierungselement in Form der Infrarot-LED 36.

Die Auswerteeinheit kann die Position der Aufzugkabine im Aufzugschacht auch auf Basis der die Infrarot-LED erfassenden Sensorzellen c3, c4, d3 und d4 bestimmen. Es ist auch möglich, dass zwischen den die Infrarot-LED erfassenden Sensorzellen c3, c4, d3, d4 und den zur Bestimmung der Position der Aufzugkabine ein kleiner Abstand von beispielsweise einer Sensorzelle gelassen wird und die Auswerteeinheit damit für die Bestimmung der Position der Aufzugkabine die ganz am Rand des PMD-Sensors 26 angeordneten Sensorzellen a1 - f1, f2 - f5, a6 - f6 und a2 - a5 verwendet.

Es ist auch möglich, dass der Reflektor als Markierungselement dient. Die Auswerteeinheit kann dann die das Markierungselement erfassenden Sensorzellen ebenfalls über den oben beschriebenen Grauwert bestimmen, da der Reflektor besonders viel der vom Sender ausgesandten elektromagnetischen Strahlung zum PMD-Sensor zurück reflektiert.

Das Markierungselement kann wie in Fig. 3 dargestellt auch als ein Zylinder 136 mit einer bekannten Höhe ausgeführt sein, wobei die Rotationsachse 142 des Zylinders 136 in Richtung des in Fig. 3 nicht dargestellten PMD-Sensors ausgerichtet ist. Das Markierungselement in Form des Zylinders 136 sendet keine elektromagnetische Strahlung aus. Auf Grund der zylinderförmigen Ausführung des Markierungselements ergibt sich bei der Erfassung durch den PMD-Sensor ein charakteristisches Entfernungsmuster für das Markierungselement in Form einer kreisrunden Fläche, welche einen um die bekannte Höhe des Zylinders 136 geringere Entfernung zum PMD-Sensor als seine unmittelbare Umgebung aufweist. Ein derartiges Entfernungsmuster kann von der Auswerteeinheit einfach mittels bekannter Mustererkennungsverfahren erkannt werden. In diesem Fall wären alle innerhalb der genannten kreisrunden Fläche liegenden Sensorzellen solche, die das Markierungselement erfassen.

Es ist auch möglich, dass die TOF-Kamera an einem Schachtboden und das Markierungselement an einem Kabinenboden der Aufzugkabine angeordnet ist. Ebenfalls ist es möglich, dass die TOF-Kamera an der Aufzugkabine und das Markierungselement unbeweglich im Aufzugschacht angeordnet ist.

Neben der beschriebenen Bestimmung der Position der Aufzugkabine im Aufzugschacht führt die Auswerteeinheit 30 mit einer festlegbaren Frequenz von beispielsweise 20 Hz eine Prüfung durch, ob der 3D-Sensor 26 das Markierungselement 36 erfasst. Es prüft entsprechend dem oben beschriebenen Vorgehen, ob mindestes eine Sensorzelle 28 das Markierungselement 36 erfasst. Die Prüfung fällt positiv aus, wenn mindestens eine Sensorzelle 28 das Markierungselement 36 erfasst. Die Prüfung fällt negativ aus, wenn für eine ununterbrochene Zeitspanne von beispielsweise 150 ms keine der Sensorzellen 28 das Markierungselement 36 erfasst hat.

Wenn die Prüfung positiv ausfällt, befindet sich das System 40 im Normalmodus und die Auswerteeinheit 30 übermittelt die bestimmte Position der Aufzugkabine 12 und eine Information über ihren Normalmodus an die Aufzugsteuerung 38 und an eine Sicherheitseinrichtung 39 der Aufzuganlage 10. Die Sicherheitseinrichtung 39 lässt in diesem Fall einen Betrieb der Aufzuganlage 10 zu und die Aufzugkabine 12 kann nach Massgabe der Aufzugsteuerung 38 im Aufzugschacht verfahren werden.

Wenn die Prüfung negativ ausfällt, bringt die Auswerteeinheit 30 das System 40 sofort in einen Fehlermodus. Die Auswerteeinheit 30 übermittelt dann eine Information über ihren Fehlermodus an die Aufzugsteuerung 38 und an die Sicherheitseinrichtung 39 der Aufzuganlage 10. Als Folge davon unterbricht die Sicherheitseinrichtung 39 sofort den Betrieb der Aufzuganlage 10 und die Aufzugkabine 12 kann nicht mehr im Aufzugschacht verfahren werden.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Aufzuganlage mit einem Aufzugschacht (12), einer im Aufzugschacht (12) verfahrbar angeordneten Aufzugkabine (14) und einem System (40) zur Bestimmung der Position der Aufzugkabine (14), das System (40) aufweisend
- einen 3D-Sensor (26),
- eine mit dem 3D-Sensor (26) in Kommunikationsverbindung stehenden Auswerteeinheit (30) und
- ein Markierungselement (36, 136),
wobei
- von den beiden Bauteilen 3D-Sensor (26) und Markierungselement (36, 136) ein Bauteil unbeweglich im Aufzugschacht (12) und das andere Bauteil an der Aufzugkabine (14) angeordnet ist,
- der 3D-Sensor (26) mehrere Sensorzellen (28) aufweist und die Auswerteeinheit (30) dazu konfiguriert ist, mit vom 3D-Sensor (26) empfangenen Messdaten eine Entfernung jeder Sensorzelle (28) zu einem von dieser Sensorzelle (28) erfassten Teil eines vom 3D-Sensor (26) erfassten Objekts zu ermitteln,
- der 3D-Sensor (26) so angeordnet ist, dass er in einem Normalmodus des Systems (40) das Markierungselement (36, 136) als Objekt erfasst und
- die Auswerteeinheit (30) dazu konfiguriert ist,
basierend auf Entfernungen von Sensorzellen (28) zu einem von diesen Sensorzellen (28) erfassten Teil des vom 3D-Sensor (26) erfassten Objekts die Position der Aufzugkabine (14) im Aufzugschacht (12) zu bestimmen,
**dadurch gekennzeichnet, dass**
- die Auswerteeinheit (30) dazu konfiguriert ist,
laufend eine Prüfung durchzuführen, ob der 3D-Sensor (26) das Markierungselement (36, 136) erfasst, und
das System (40) in einen Fehlermodus zu bringen, sobald die genannte Prüfung negativ ausfällt.

2. Aufzuganlage nach Anspruch 1,
**dadurch gekennzeichnet, dass**
die Auswerteeinheit (30) dazu konfiguriert ist, die genannte Prüfung so durchzuführen, dass sie dann negativ ausfällt, wenn der 3D-Sensor (26) das Markierungselement (36, 136) für eine ununterbrochene Zeitspanne mit einer vorgegebenen Zeitdauer nicht erfasst.

3. Aufzuganlage nach Anspruch 1 oder 2,
**dadurch gekennzeichnet, dass**
- das System (40) einen Sender (25) zum Aussenden von elektromagnetischer Strahlung aufweist und der 3D-Sensor (26) dazu konfiguriert ist, für jede Sensorzelle (28) eine Laufzeit der vom Sender (25) ausgesandten und vom erfassten Objekt reflektierten elektromagnetischen Strahlung zu bestimmen, und
- die Auswerteeinheit (30) dazu konfiguriert ist, die Entfernung jeder Sensorzelle (28) zu einem von dieser Sensorzelle (28) erfassten Teil des vom 3D-Sensor (26) erfassten Objekts auf Grund der genannten Laufzeiten zu bestimmen.

4. Aufzuganlage nach Anspruch 1, 2 oder 3,
**dadurch gekennzeichnet, dass**
- das Markierungselement (136) so angeordnet ist und eine räumliche Ausdehnung aufweist, dass sich ein charakteristisches Entfernungsmuster gegenüber dem 3D-Sensor (26) ergibt und
- die Auswerteeinheit (30) dazu konfiguriert ist, die das Markierungselement (136) erfassenden Sensorzellen (28) auf Grund des genannten Entfernungsmusters des Markierungselements (136) zu bestimmen.

5. Aufzuganlage nach einem der Ansprüche 1 bis 4,
**dadurch gekennzeichnet, dass**
- das Markierungselement (36) so ausgeführt ist, dass es aktiv elektromagnetische Strahlung aussendet,
- die Sensorzellen (28) des 3D-Sensors (26) so ausgeführt sind, dass sie die vom Markierungselement (36) ausgesandte elektromagnetische Strahlung erfassen können,
- der 3D-Sensor (26) so ausgeführt ist, dass er pro Sensorzelle (28) eine die Menge der genannten elektromagnetischen Strahlung kennzeichnende Intensitäts-Kenngrösse an die Auswerteeinheit (30) übermittelt und
- die Auswerteeinheit (30) dazu konfiguriert ist, die das Markierungselement (36) erfassenden Sensorzellen (28) auf Grund der genannten Intensitäts-Kenngrössen zu bestimmen.

6. Aufzuganlage nach Anspruch 5,
**dadurch gekennzeichnet, dass**
das Markierungselement eine LED (36) aufweist.

7. Aufzuganlage nach Anspruch 6,
**dadurch gekennzeichnet, dass**
die LED als eine Infrarot-LED (36) ausgeführt ist.

8. Aufzuganlage nach einem der Ansprüche 2 bis 7,
**dadurch gekennzeichnet, dass**
die Auswerteeinheit (30) dazu konfiguriert ist,
- diejenigen Sensorzellen (28) zu bestimmen, welche das Markierungselement (36, 136) erfassen, und
- die Position der Aufzugkabine (14) im Aufzugschacht (12) basierend auf den ermittelten Entfernungen zum erfassten Objekt dieser Sensorzellen (28) und/oder Sensorzellen (28), welche in einem an die genannten Sensorzellen (28) angrenzenden Bereich angeordnet sind, zu bestimmen.

9. Aufzuganlage nach Anspruch 8,
**dadurch gekennzeichnet, dass**
und um das Markierungselement (36) herum oder an das Markierungselement (36) angrenzend ein Reflektor (34) zum Reflektieren der vom Sender (25) ausgesandten elektromagnetischen Strahlung in Richtung 3D-Sensor (26) angeordnet ist.

10. Verfahren zur Bestimmung der Position einer in einem Aufzugschacht (12) verfahrbar angeordneten Aufzugkabine (14) einer Aufzuganlage (10) gemäss den Ansprüchen 1 bis 9, wobei die Auswerteeinheit (30)
- basierend auf Entfernungen von Sensorzellen (28) zu einem von diesen Sensorzellen (28) erfassten Teil des vom 3D-Sensor (26) erfassten Objekts die Position der Aufzugkabine (14) im Aufzugschacht (12) bestimmt,
- laufend eine Prüfung durchführt, ob der 3D-Sensor (26) das Markierungselement (36, 136) erfasst, und
- das System (40) in einen Fehlermodus bringt, sobald die genannte Prüfung negativ ausfällt.

## Claims

1. Elevator system with an elevator shaft (12), an elevator car (14) arranged to move in the elevator shaft (12), and a system (40) for determining the position of the elevator car (14), the system (40) comprising
- a 3D sensor (26),
- an evaluation unit (30), which is in communication with the 3D sensor (26), and
- a marking element (36, 136),
wherein
- of the two components 3D sensor (26) and marking element (36, 136), one component is arranged immovably in the elevator shaft (12) and the other component is arranged on the elevator cab (14),
- the 3D sensor (26) has multiple sensor cells (28), and the evaluation unit (30) is configured to use measurement data received by the 3D sensor (26) to determine a distance of each sensor cell (28) from a part, detected by this sensor cell (28), of an object detected by the 3D sensor (26),
- the 3D sensor (26) is arranged such that in a normal mode of the system (40) it detects the marking element (36, 136) as an object, and
- the evaluation unit (30) is configured to determine the position of the elevator cab (14) in the elevator shaft (12) based on distances of sensor cells (28) from a part, detected by these sensor cells (28), of the object detected by the 3D sensor (26),
**characterized in that**
- the evaluation unit (30) is configured to continuously carry out a test of whether the 3D sensor (26) detects the marking element (36, 136), and
to bring the system (40) into an error mode as soon as said test turns out negative.

2. Elevator system according to claim 1,
**characterized in that**
the evaluation unit (30) is configured to carry out said test such that it turns out negative if the 3D sensor (26) does not detect the marking element (36, 136) for an uninterrupted span of time having a specified duration.

3. Elevator system according to claim 1 or 2,
**characterized in that**
- the system (40) comprises a transmitter (25) for emitting electromagnetic radiation, and the 3D sensor (26) is configured to determine for each sensor cell (28) a propagation time of the electromagnetic radiation emitted by the transmitter (25) and reflected from the detected object, and
- the evaluation unit (30) is configured to determine the distance of each sensor cell (28) from a part, detected by this sensor cell (28), of the object detected by the 3D sensor (26), on the basis of the mentioned propagation times.

4. Elevator system according to claim 1, 2, or 3,
**characterized in that**
- the marking element (136) is arranged and has a spatial extent such that a characteristic distance pattern is produced relative to the 3D sensor (26), and
- the evaluation unit (30) is configured to determine the sensor cells (28) that are detecting the marking element (136) on the basis of said distance pattern of the marking element (136).

5. Elevator system according to any one of claims 1 to 4,
**characterized in that**
- the marking element (36) is designed such that it actively emits electromagnetic radiation,
- the sensor cells (28) of the 3D sensor (26) are designed such that they can detect the electromagnetic radiation emitted by the marking element (36),
- the 3D sensor (26) is designed such that it transmits, per sensor cell (28), an intensity characteristic variable characterizing the quantity of the mentioned electromagnetic radiation to the evaluation unit (30), and
- the evaluation unit (30) is configured to determine the sensor cells (28) detecting the marking element (36) on the basis of the mentioned intensity characteristic variables.

6. Elevator system according to claim 5,
**characterized in that**
the marking element has an LED (36).

7. Elevator system according to claim 6,
**characterized in that**
the LED is designed as an infrared LED (36).

8. Elevator system according to any one of claims 2 to 7,
**characterized in that**
the evaluation unit (30) is configured to
- determine those sensor cells (28) which detect the marking element (36, 136), and
- determine the position of the elevator cab (14) in the elevator shaft (12) based on the determined distances to the detected object of these sensor cells (28) and/or sensor cells (28) arranged in a region adjacent to the mentioned sensor cells (28).

9. Elevator system according to claim 8,
**characterized in that**
a reflector (34) is arranged around the marking element (36) or adjacent to the marking element (36), for reflecting the electromagnetic radiation emitted by the transmitter (25) in the direction of the 3D sensor (26).

10. A method for determining the position of an elevator cab (14), movably arranged in an elevator shaft (12), with a system (40) according to claims 1 to 9, wherein the evaluation unit (30)
- determines the position of the elevator cab (14) in the elevator shaft (12) based on distances of sensor cells (28) from a part, detected by these sensor cells (28), of the object detected by the 3D sensor (26),
- continuously carries out a test of whether the 3D sensor (26) detects the marking element (36, 136), and
- brings the system (40) into an error mode as soon as said test turns out negative.

## Revendications

1. Système d'ascenseur comprenant une cage d'ascenseur (12), une cabine d'ascenseur (14) agencée pour se déplacer dans la cage d'ascenseur (12) et un système (40) pour déterminer la position de la cabine d'ascenseur (14), le système (40) comprenant
- un capteur 3D (26),
- une unité d'évaluation (30) qui est en communication avec le capteur 3D (26), et
- un élément de marquage (36, 136),
dans lequel
- des deux composants que sont le capteur 3D (26) et l'élément de marquage (36, 136), un composant est disposé de manière immobile dans la cage d'ascenseur (12) et l'autre composant est disposé sur la cabine d'ascenseur (14),
- le capteur 3D (26) comporte plusieurs cellules de capteur (28), et l'unité d'évaluation (30) est configurée pour utiliser les données de mesure reçues par le capteur 3D (26) afin de déterminer la distance entre chaque cellule de capteur (28) et une partie, détectée par cette cellule de capteur (28), d'un objet détecté par le capteur 3D (26),
- le capteur 3D (26) est disposé de telle sorte que, dans un mode normal du système (40), il détecte l'élément de marquage (36, 136) comme un objet, et
- l'unité d'évaluation (30) est configurée pour déterminer la position de la cabine d'ascenseur (14) dans la cage d'ascenseur (12) sur la base des distances des cellules de capteur (28) par rapport à une partie, détectée par ces cellules de capteur (28), de l'objet détecté par le capteur 3D (26), **caractérisé en ce que**
- l'unité d'évaluation (30) est configurée pour effectuer en continu un test visant à déterminer si le capteur 3D (26) détecte l'élément de marquage (36, 136), et
à mettre le Système (40) en mode erreur dès que ledit test s'avère négatif.

2. Système d'ascenseur selon la revendication 1,
**caractérisé en ce que**
l'unité d'évaluation (30) est configurée pour effectuer ledit test de telle sorte qu'il s'avère négatif si le capteur 3D (26) ne détecte pas l'élément de marquage (36, 136) pendant une période ininterrompue d'une durée spécifiée.

3. Système d'ascenseur selon la revendication 1 ou 2,
**caractérisé en ce que**
- le système (40) comprend un émetteur (25) pour émettre un rayonnement électromagnétique, et le capteur 3D (26) est configuré pour déterminer pour chaque cellule de capteur (28) un temps de propagation du rayonnement électromagnétique émis par l'émetteur (25) et réfléchi par l'objet détecté, et
- l'unité d'évaluation (30) est configurée pour déterminer la distance de chaque cellule de capteur (28) par rapport à une partie, détectée par cette cellule de capteur (28), de l'objet détecté par le capteur 3D (26), sur la base des temps de propagation mentionnés.

4. Système d'ascenseur selon la revendication 1, 2 ou 3,
**caractérisé en ce que**
- l'élément de marquage (136) est agencé et présente une étendue spatiale telle qu'un motif de distance caractéristique est produit par rapport au capteur 3D (26), et
- l'unité d'évaluation (30) est configurée pour déterminer les cellules de capteur (28) qui détectent l'élément de marquage (136) sur la base dudit motif de distance de l'élément de marquage (136).

5. Système d'ascenseur selon l'une quelconque des revendications 1 à 4,
**caractérisé en ce que**
- l'élément de marquage (36) est conçu de manière à émettre activement un rayonnement électromagnétique,
- les cellules de détection (28) du capteur 3D (26) sont conçues de manière à pouvoir détecter le rayonnement électromagnétique émis par l'élément de marquage (36),
- le capteur 3D (26) est conçu de manière à transmettre, par cellule de capteur (28), une variable caractéristique d'intensité caractérisant la quantité du rayonnement électromagnétique mentionné à l'unité d'évaluation (30), et
- l'unité d'évaluation (30) est configurée pour déterminer les cellules de capteur (28) détectant l'élément de marquage (36) sur la base des variables caractéristiques d'intensité mentionnées.

6. Système d'ascenseur selon la revendication 5,
**caractérisé en ce que**
l'élément de marquage comporte une LED (36).

7. Système d'ascenseur selon la revendication 6,
**caractérisé en ce que**
la LED est conçue comme une LED infrarouge (36).

8. Système d'ascenseur selon l'une quelconque des revendications 2 à 7,
**caractérisé en ce que**
l'unité d'évaluation (30) est configurée pour
- déterminer les capteurs (28) qui détectent l'élément de marquage (36, 136), et
- déterminer la position de la cabine d'ascenseur (14) dans la cage d'ascenseur (12) sur la base des distances déterminées par rapport à l'objet détecté par ces cellules de détection (28) et/ou par des cellules de détection (28) disposées dans une zone adjacente aux cellules de détection (28) mentionnées.

9. Système d'ascenseur selon la revendication 8,
**caractérisé en ce que**
un réflecteur (34) est disposé autour de l'élément de marquage (36) ou à proximité de l'élément de marquage (36), pour réfléchir le rayonnement électromagnétique émis par l'émetteur (25) en direction du capteur 3D (26).

10. Procédé pour déterminer la position d'une cabine d'ascenseur (14) disposée de manière mobile dans une cage d'ascenseur (12), avec un système (40) selon les revendications 1 à 9, dans lequel l'unité d'évaluation (30)
- déterminer la position de la cabine d'ascenseur (14) dans la cage d'ascenseur (12) sur la base des distances entre les cellules de capteur (28) et une partie, détectée par ces cellules de capteur (28), de l'objet détecté par le capteur 3D (26),
- effectue en continu un test pour déterminer si le capteur 3D (26) détecte l'élément de marquage (36, 136), et
- met le Système (40) en mode erreur dès que ledit test s'avère négatif.
